# EUROPÄISCHE PATENTANMELDUNG

(11) **EP 3 498 887 A1**
(43) Veröffentlichungstag der Anmeldung: **19.06.2019**
(21) Anmeldenummer: 17207898.2
(22) Anmeldetag: 18.12.2017
(51) Int. Cl.: C25B 15/02, C25B 15/08, C25B 1/04

(54) **ELEKTROLYSEVORRICHTUNG UND VERFAHREN ZUM BETREIBEN DER ELEKTROLYSEVORRICHTUNG**

(71) Anmelder: Siemens Aktiengesellschaft, 80333 München (DE)
(72) Erfinder: Wolf, Erik, 91341 Röttenbach (DE)

(57) **Zusammenfassung**

Die Erfindung betrifft eine Elektrolysevorrichtung mit einer Kühlvorrichtung und ein Verfahren zum Betreiben der Elektrolysevorrichtung mit Kühlvorrichtung. Die Elektrolysevorrichtung umfasst wenigstens eine Elektrolysezelle mit wenigstens einer ersten Eingangsöffnung für einen ersten Fluidstrom und mit wenigstens einer ersten Ausgangsöffnung für einen zweiten Fluidstrom. Sie umfasst weiterhin eine Kühlvorrichtung zum Kühlen des zweiten Fluidstroms, wobei die Kühlvorrichtung wenigstens teilweise im Boden angeordnet ist und geeignet ist, eine im Vergleich zu einer ersten Temperatur des zweiten Fluidstroms niedrigere zweite Temperatur des Bodens anzunehmen und den zweiten Fluidstrom zu kühlen.

## Beschreibung

Die Erfindung betrifft eine Elektrolysevorrichtung mit einer Kühlvorrichtung und ein Verfahren zum Betreiben der Elektrolysevorrichtung mit Kühlvorrichtung.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Der Eduktstrom der Wasserelektrolyse sollte entsalzenes Wasser darstellen. Die Elektrolyse findet dabei üblicherweise in Elektrolysezellen statt, wobei mehrere Elektrolysezellen zu einem Modul zusammengefasst sein können. Eine Vielzahl von Elektrolysezellen beziehungsweise eine Mehrzahl von Modulen können zu einem sogenannten Elektrolysezellenstapel (englisch "stack") zusammengefasst sein. Weiterhin muss die in der Elektrolysezelle anfallende Abwärme abgeführt werden, sodass ein stabiles und robustes Kühlkonzept für die Elektrolyse benötigt wird.

Insbesondere in tropischen und subtropischen Regionen, in denen eine große Menge Sonnenenergie zur Verfügung steht, stellt das Kühlkonzept eine Herausforderung dar. Die Abwärme der Elektrolyse fällt typischerweise in einem Temperaturbereich zwischen 60 °C und 100 °C, insbesondere zwischen 60 °C und 80 °C, an, was eine Kühlung bei Umgebungstemperaturen von bis zu 50 ° nachteilig erschwert, da die Temperaturdifferenz zwischen der Wärmequelle Elektrolyse und der Umgebungsluft so gering ist, dass nachteilig sehr große Wärmetauscher mit hohem Energiebedarf und hohen Investitionskosten benötigt werden. Weiterhin werden große Volumenströme an Kühlmedien bei diesen Temperaturen benötigt, was nachteilig einen hohen Energieverbrauch bei Pumpen und Gebläsen zur Folge hat.

Bei einer Druck-Elektrolyse kann zusätzlich das Wasser nicht direkt aus dem Elektrolysekreislauf in einen Luftkühler geführt werden, da hier in der Elektrolyseeinheit hohe Drücke herrschen. Ein Luftkühler muss daher für hohe Drücke ausgelegt sein, was ihn nachteilig aufwendig zu gestalten und daher teuer macht.

Alternativ wird im Stand der Technik der Druck-Elektrolyse zunächst die Abwärme der Elektrolyse mit einem Wärmetauscher auf ein flüssiges Kühlmedium übertragen, welches nicht unter Druck steht. Dieses Kühlmedium wird daraufhin in einen Luftkühler geleitet, in dem es abkühlt. Nachteiligerweise muss die geringe Temperaturdifferenz zwischen der Wärmequelle Elektrolyse und der Umgebungsluft bei diesem Kühlprozess zum einen für das Übertragen der Wärme von der Elektrolyse auf das flüssige Kühlmedium und für das Übertragen der Wärme von dem flüssigen Kühlmedium auf die Umgebungsluft ausreichen. Auch hier sind nachteilig sehr große Wärmetauscher nötig, um die Elektrolyse ausreichend kühlen zu können.

Aufgabe der vorliegenden Erfindung ist es daher, ein Verfahren und eine Vorrichtung anzugeben, welche ein energieeffizientes Kühlen der Elektrolyseeinheit, insbesondere in heißen Klimaregionen, ermöglicht.

Die Aufgabe wird mit einer Elektrolysevorrichtung gemäß Anspruch 1 und einem Verfahren zum Betreiben der Elektrolysevorrichtung gemäß Anspruch 6 gelöst.

Die Elektrolysevorrichtung umfasst erfindungsgemäß wenigstens eine Elektrolysezelle mit wenigstens einer ersten Eingangsöffnung für einen ersten Fluidstrom und mit wenigstens einer ersten Ausgangsöffnung für einen zweiten Fluidstrom. Weiterhin umfasst die Elektrolysevorrichtung eine Kühlvorrichtung zum Kühlen des zweiten Fluidstroms, wobei die Kühlvorrichtung wenigstens teilweise im Boden angeordnet ist. Die Kühlvorrichtung ist geeignet, eine im Vergleich zu einer ersten Temperatur des zweiten Fluidstroms niedrigere zweite Temperatur des Bodens anzunehmen und somit den zweiten Fluidstrom zu kühlen.

Das erfindungsgemäße Verfahren zum Betreiben einer Elektrolysevorrichtung umfasst mehrere Schritte. Zunächst wird eine Elektrolysezelle mit wenigstens einer ersten Eingangsöffnung für einen ersten Fluidstrom und mit wenigstens einer ersten Ausgangsöffnung für einen zweiten Fluidstrom bereitgestellt. Weiterhin wird eine Kühlvorrichtung zum Kühlen des zweiten Fluidstroms bereitgestellt, wobei die Kühlvorrichtung wenigstens teilweise im Boden angeordnet ist. In die Kühlvorrichtung im Boden wird dann ein dritter Fluidstrom geführt. Der dritte Fluidstrom kühlt auf eine zweite Temperatur ab, welche unterhalb einer ersten Temperatur des zweiten Fluidstroms liegt. Mittels des dritten Fluidstroms wird der zweite Fluidstrom gekühlt.

Vorteilhaft wird die Kühlung der Elektrolysevorrichtung dadurch erreicht, dass ausgenutzt wird, dass der Boden eine niedrigere Temperatur im Vergleich zur Umgebungsluft aufweist. Der Anteil der Kühlvorrichtung, welche im Boden verläuft, kann variabel gestaltet werden. In Abhängigkeit der Bodentemperatur zur zu kühlenden Temperatur der Elektrolyseeinheit, insbesondere 60 °C, kann so über die Länge des Bodenanteils der Kühlvorrichtung ein ideales Verhältnis der Kühlrate zur Streckenlänge vorteilhaft ausgewählt werden.

In einer weiteren vorteilhaften Ausgestaltung und Weiterbildung der Erfindung ist die erste Eingangsöffnung der Elektrolysevorrichtung mit der ersten Ausgangsöffnung der Elektrolysevorrichtung mittels einer ersten Leitung verbunden. In der ersten Leitung ist die Kühlvorrichtung derart angeordnet, dass der zweite Fluidstrom gekühlt wird und wenigstens teilweise als ersten Fluidstrom in die Elektrolysezelle zurückgeführt wird.

In anderen Worten bedeutet das, dass auf ein Kühlmedium, also das dritte Fluid, verzichtet wird und somit das zweite Fluid selbst als ein dritter Fluidstrom durch die Kühlvorrichtung strömt und direkt im Boden abgekühlt wird. Vorteilhaft wird somit der Einsatz eines Kühlmittels vermieden, wodurch Kosten für das Kühlmittel eingespart werden und die Vorrichtung Energie effizient arbeitet, da keine Wartungsintervalle für ein Kühlmittel notwendig sind.

In einer weiteren vorteilhaften Ausgestaltung und Weiterbildung der Erfindung ist die Kühlvorrichtung als eine zweite Leitung ausgestaltet, welche mittels eines Wärmetauschers thermisch mit der ersten Leitung gekoppelt ist.

Das bedeutet in anderen Worten, dass der dritte Fluidstrom ein extra Kühlmedium umfassend ein drittes Fluid darstellt, insbesondere Wasser oder eine Wasser-Glykol-Mischung, welches in der zweiten Leitung geführt wird. Es wird somit im Boden vorgekühlt und nimmt in einem Wärmetauscher die Wärme des zweiten Fluidstroms auf. Der abgekühlte Fluidstrom wird als erster Fluidstrom wenigstens teilweise zurück in die Elektrolysevorrichtung geführt.

In einer weiteren vorteilhaften Ausgestaltung und Weiterbildung der Erfindung umfasst die Kühlvorrichtung eine Wärmespeichervorrichtung. Die Wärmespeichervorrichtung kann insbesondere ein Tank sein, der in den Boden eingelassen ist und durch den der dritte Fluidstrom geführt wird. In der Nacht, also bei niedrigen Umgebungstemperaturen, wird das dritte Fluid in diesem Tank gespeichert und anschließend am Tag oder in Zeiten, in denen die Elektrolysevorrichtung besonders stark eingesetzt wird, wird das dritte Fluid in einen Wärmetauscher geführt und kühlt somit das zweite Fluid. Alternativ ist denkbar, dass das zweite Fluid direkt in den Tank geführt wird, um dort über Nacht abgekühlt zu werden und anschließend als das erste Fluid wieder zurück in die Elektrolysevorrichtung geführt werden kann.

Es ist alternativ denkbar dass die Wärmespeichervorrichtung ein Feststoff-Kältespeicher mit großer Masse ist, insbesondere Stein oder ein Phasenwechselmaterial, insbesondere Paraffine oder Salzschmelzen.

Vorteilhaft kann durch den Einsatz einer Wärmespeichervorrichtung ausgenutzt werden, dass die Umgebungstemperaturen in der Nacht deutlich niedriger sind als am Tag, wodurch zusätzlich die Umgebungsluft zu Kühlung mit verwendet werden kann. Zweckmäßigerweise umfasst die Kühlvorrichtung dann wenigstens einen Teil, der oberhalb des Bodens angeordnet ist und insbesondere nachts einen thermischen Austausch mit der Umgebung ermöglicht.

In einer weiteren vorteilhaften Ausgestaltung und Weiterbildung der Erfindung umfasst die Kühlvorrichtung einen Kühlturm, insbesondere einen Trockenkühlturm oder einen Nasskühlturm, zum Vorkühlen des ersten und/oder zweiten Fluidstroms. Vorteilhaft ermöglicht der Einsatz eines Kühlturms zusätzlich, die Temperatur der Umgebungsluft, welche normalerweise unterhalb der Betriebstemperatur der Elektrolyse von ungefähr 60 °C liegt, zum Kühlen zu nutzen. Es ist daher vorteilhaft, den Kühlturm vor dem sich im Boden befindlichen Teil der Kühlvorrichtung anzuordnen, um ein Vorkühlen des ersten, zweiten oder dritten Fluids zu gewährleisten.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Elektrolysezelle mit einer direkten Kühlung mittels einer im Boden angeordneten Kühlvorrichtung;
- Figur 2: eine Elektrolysezelle mit einer indirekten Kühlung mittels einer im Boden angeordneten Kühlvorrichtung;
- Figur 3: eine Elektrolysezelle mit einer indirekten Kühlung mittels einer im Boden angeordneten Kühlvorrichtung mit einem Kühlturm.

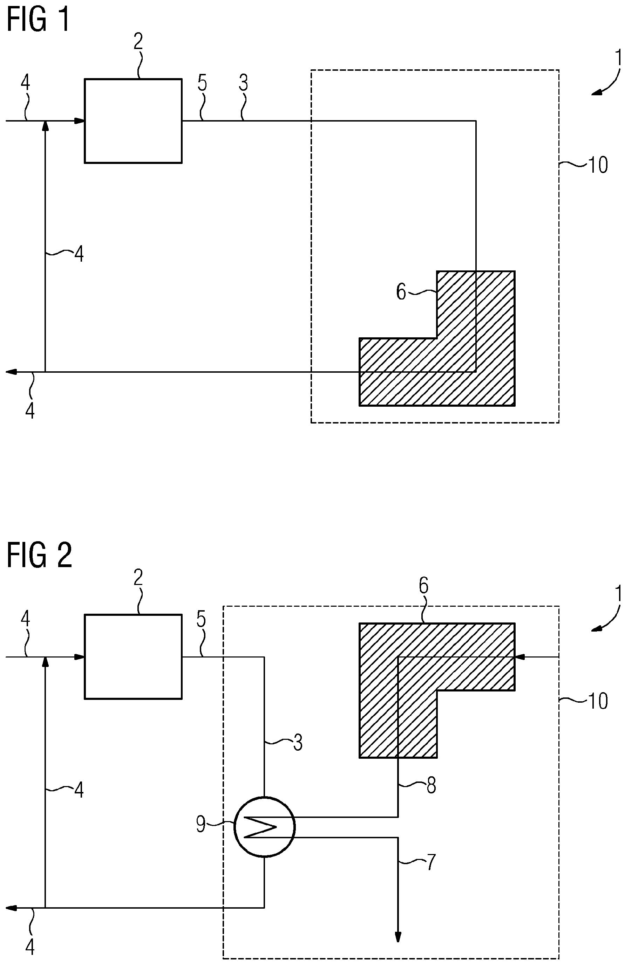

Figur 1 zeigt eine Elektrolysevorrichtung 1 mit einer Elektrolysezelle 2, in die Wasser 4 als Edukt geführt wird und in Wasserstoff und Sauerstoff zerlegt wird. Während des Elektrolyseprozesses entsteht Wärme, welche aus der Elektrolysezelle heraus transportiert werden muss, um einen hohen Wirkungsgrad zu gewährleisten. In dem in Figur 1 gezeigten ersten Ausführungsbeispiel wird das Wasser, welches in der Elektrolyse nicht umgesetzt wird aber die Wärme des Prozesses aufnimmt, direkt über eine erste Leitung 3 als zweites Fluid 5 durch eine Kühlvorrichtung 10 geführt, welche im Erdreich 6 angeordnet ist. Kühlvorrichtung 10 bedeutet hier in anderen Worten, dass Rohr im Boden eingelassen ist. Vorteilhaft liegt die Temperatur des Erdreiches im gesamten jahreszeitlichen Verlauf und in allen Klimazonen unterhalb der Lufttemperatur. Somit kann die Abwärme der Elektrolyse insbesondere an den Boden 6 abgegeben werden. Das abgekühlte zweite Fluid 5, in diesem Beispiel das nicht reagierte Wasser der Elektrolyse, kann anschließend wenigstens teilweise als ein erstes Fluid 4 zurück in die Elektrolysezelle 2 geführt werden. Es kann ebenso aus dem System heraus geführt werden.

Figur 2 zeigt eine Elektrolysezelle 2 mit einer indirekten Kühlung mittels einer im Boden 6 angeordneten Kühlvorrichtung 10. Das nicht reagierte Wasser aus der Elektrolysezelle 2 wird in einen Wärmetauscher 9 geführt. Das Kühlfluid oder auch drittes Fluid 7, welches im Wärmetauscher 9 für Kühlung sorgt, wurde bevor es in den Wärmetauscher 9 fließt im Boden 6 gekühlt. Insbesondere eignet sich ein Wasser-Glykol-Gemisch als Kühlmittel. Das dritte Fluid 7 wird durch eine dritte Leitung 8 in den Boden 6 und anschließend in den Wärmetauscher 9 geführt. Dort nimmt es die Wärme des zweiten Fluids 5 auf und kühlt dieses somit.

Es ist für das erste und zweite Ausführungsbeispiel alternativ auch denkbar, dass das nicht reagierte Wasser der Elektrolysezelle noch in der Elektrolysezelle die Wärme auf ein Kühlmedium abgibt, insbesondere auf demineralisiertes Wasser, und anschließend durch den Boden 6 oder den Wärmetauscher 9 geführt wird.

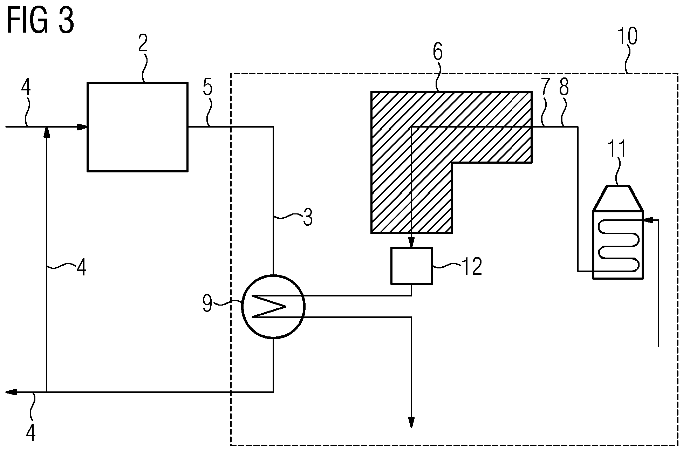

Figur 3 zeigt ein drittes Ausführungsbeispiel mit einer Elektrolysezelle 2, einer im Boden 6 eingelassenen Kühlvorrichtung 10 und einem Trockenkühlturm 11. In besonders warmer Umgebung eignen sich insbesondere auf Kompression basierende Kühleinheiten. Das Kühlmittel wird dabei zunächst in dem Trockenkühlturm 11 vorgekühlt, anschließend im Boden 6 weiter abgekühlt und in einer Kompressionskältemaschine 12 noch weiter abgekühlt, bevor es in den Wärmetauscher 9 geführt wird.

## Patentansprüche

1. Elektrolysevorrichtung (1) umfassend:
- wenigstens eine Elektrolysezelle (2) mit wenigstens einer ersten Eingangsöffnung für einen ersten Fluidstrom (4) und mit wenigstens einer ersten Ausgangsöffnung für einen zweiten Fluidstrom (5),
- mit einer Kühlvorrichtung (10) zum Kühlen des zweiten Fluidstroms (5), wobei die Kühlvorrichtung (10) wenigstens teilweise im Boden (6) angeordnet ist und geeignet ist, eine im Vergleich zu einer ersten Temperatur des zweiten Fluidstroms (5) niedrigere zweite Temperatur des Bodens (6) anzunehmen und den zweiten Fluidstrom (5) zu kühlen.

2. Elektrolysevorrichtung (1) nach Anspruch 1, wobei die erste Eingangsöffnung mit der ersten Ausgangsöffnung mittels einer ersten Leitung (3) verbunden ist und in der ersten Leitung (3) die Kühlvorrichtung (10) derart angeordnet ist, den zweiten Fluidstrom (5) zu kühlen und wenigstens teilweise als ersten Fluidstrom (4) in die Elektrolysezelle (2) zurückzuführen.

3. Elektrolysevorrichtung (1) nach Anspruch 1 oder 2, wobei die Kühlvorrichtung (10) als eine zweite Leitung (8) ausgestaltet ist, welche mittels eines Wärmetauschers (9) thermisch mit der ersten Leitung (4) gekoppelt ist.

4. Elektrolysevorrichtung (1) nach einem der vorhergehenden Ansprüche, wobei die Kühlvorrichtung (10) eine Wärmespeichervorrichtung umfasst.

5. Elektrolysevorrichtung (1) nach einem der vorhergehenden Ansprüche, wobei die Kühlvorrichtung (10) einen Kühlturm (11) zum Vorkühlen des ersten (4) und/oder zweiten Fluidstroms (5) umfasst.

6. Verfahren zum Betreiben einer Elektrolysevorrichtung (1) mit folgenden Schritten:
- Bereitstellen wenigstens einer Elektrolysezelle (2) mit einer ersten Eingangsöffnung für einen ersten Fluidstrom (4) und mit wenigstens einer ersten Ausgangsöffnung für einen zweiten Fluidstrom (5),
- Bereitstellen einer Kühlvorrichtung (10) zum Kühlen des zweiten Fluidstroms (5), wobei die Kühlvorrichtung (10) wenigstens teilweise im Boden (6) angeordnet ist,
- Führen eines dritten Fluidstroms (7) in der Kühlvorrichtung (10) im Boden (6),
- Abkühlen des dritten Fluidstroms (7) auf eine zweite Temperatur, welche unterhalb einer ersten Temperatur des ersten (4) oder zweiten Fluidstroms (5) liegt,
- Kühlen des ersten (4) oder zweiten Fluidstroms (5).

7. Verfahren nach Anspruch 6, wobei als der dritte Fluidstrom (7) der zweite Fluidstrom (5) verwendet wird.

8. Verfahren nach einem der Ansprüche 6 oder 7, wobei als der dritte Fluidstrom (7) Wasser verwendet wird.

9. Verfahren nach einem der Ansprüche 6 oder 7, wobei als der dritte Fluidstrom (7) ein Wasser-Glycol-Gemisch verwendet wird.

10. Verfahren nach einem der Ansprüche 6 bis 9, wobei der dritte Fluidstrom (7) vor dem Führen durch den Boden (6) in einem Kühlturm (11) vorgekühlt wird.
